# EUROPEAN PATENT APPLICATION

(11) **EP 0 661 145 A1**
(43) Date of publication of application: **05.07.1995**
(21) Application number: 94830582.6
(22) Date of filing: 23.12.1994
(51) Int. Cl.: B29B 17/00, B29C 47/28, B29B 13/10, B29C 70/26

(54) **A system for recycling heterogeneous plastic materials for coating metal articles**

(30) Priority: 31.12.1993 IT MI932775
(71) Applicant: LAGER ETABLISSEMENT, Vaduz (LI)
(72) Inventor: Klein, Rudolf, c/o Lager Etabl., FL-Vaduz, Liechtenstein (LI)
(74) Representative: Cicogna, Franco

(57) **Abstract**

The present invention relates to a system for recycling heterogeneous plastic materials for coating metal articles, characterized in that the system comprises a grinding assembly for grinding the plastic materials to be recycled, communicating with a storage bin for supplying an extruder, having an extruding head arranged transversely of a core supplying line for supplying a metal core to be coated by the recycled plastic material.

At the outlet of the extruder head a calibrating assembly is provided, downstream of which is arranged a cooling assembly.

## Description

### BACKGROUND OF THE INVENTION

The present invention relates to a system for recycling heterogeneous plastic materials for coating metal articles.

As is known, a very important problem is that of recycling the used or waste plastic materials, in particular heterogeneous plastic materials deriving from a plurality of different waste plastic materials.

At present, great difficulties are encountered in recycling heterogeneous plastic materials, since, because of the different natures of said plastic materials, it is not possible to provide products susceptible to be industrially exploited.

### SUMMARY OF THE INVENTION

Accordingly, the aim of the present invention is to solve the above mentioned problem, by providing a system for recycling heterogeneous plastic materials for coating metal articles, which allows to obtain well-finished products, in particular by using the plastic material as an outer coating of metal cores, for example of a tubular type, in order to make poles and the like.

Within the scope of the above mentioned aim, a main object of the present invention is to provide such a plastic material recycling system which affords the possibility to obtain several types of coatings, with thicknesses which can be easily modified with respect to the used metal core.

Another object of the present invention is to provide such a plastic material recycling system which is specifically adapted to provide a satisfactory coating of the plastic material on the metal core without causing the drawbacks which are at present encountered in prior systems which are not adapted to process heterogeneous plastic materials.

Yet another object of the present invention is to provide such a plastic material recycling system which, owing to its constructional features, is very reliable and safe in operation and which, moreover, is very advantageous from a mere economic standpoint.

According to one aspect of the present invention, the above mentioned aim and objects, as well as yet other objects, which will become more apparent hereinafter, are achieved by a system for recycling heterogeneous plastic materials for coating metal articles, characterized in that said system comprises a grinding assembly for grinding plastic materials to be recycled, said grinding assembly communicating with a storing bin for supplying an extruder, provided with an extruder head, arranged transversely of a metal core supplying line, for supplying metal cores to be coated by said plastic material, at the outlet of said extruder head there being provided a calibrating assembly, downstream of which there is arranged a cooling assembly.

### BRIEF DESCRIPTION OF THE DRAWINGS

Further characteristics and advantages of the invention will become more apparent hereinafter from the following detailed disclosure of a preferred, though not exclusive, embodiment of a system for recycling heterogeneous plastic materials for coating metal articles, which is illustrated, by way of an indicative, but not limitative example, in the accompanying drawings, where:

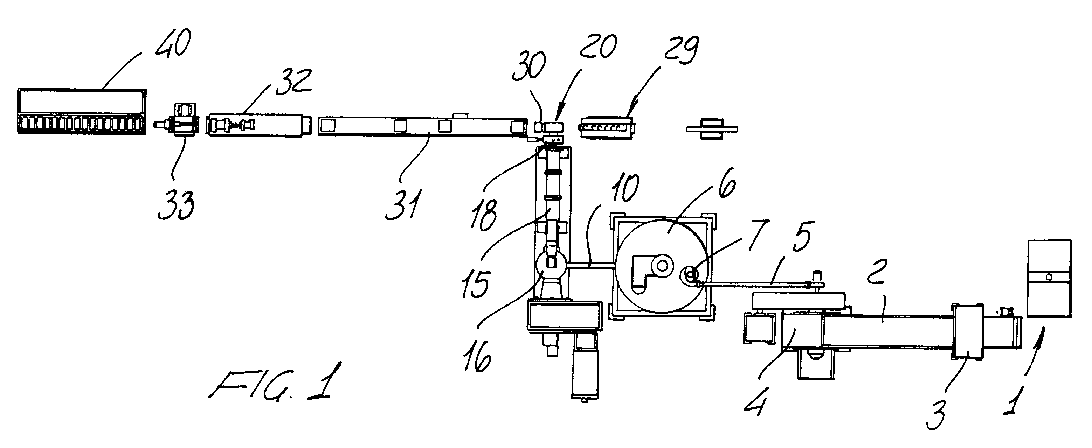

Figure 1 is a top plan view of the recycling system according to the present invention;

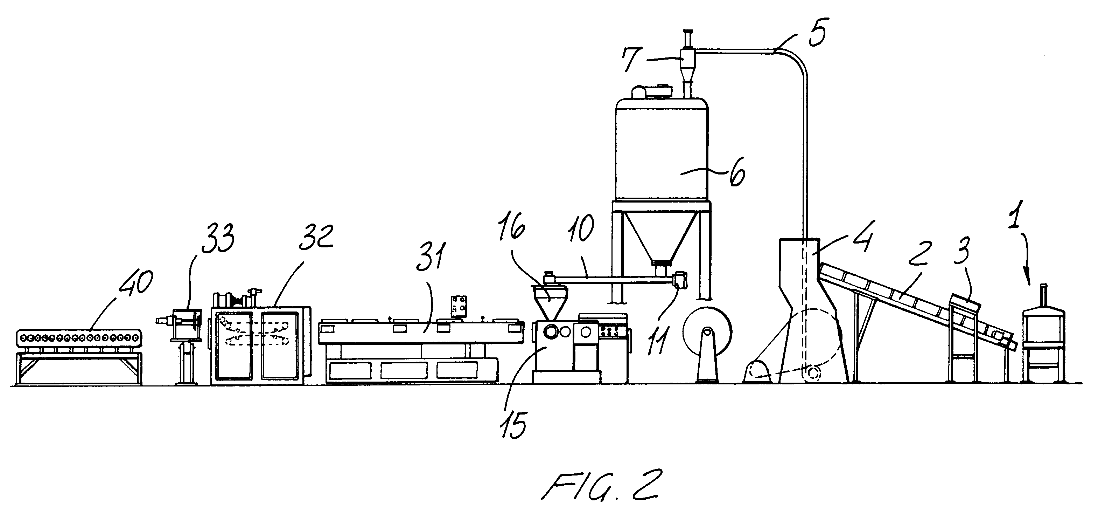

Figure 2 is an elevation view of the recycling system according to the present invention; and

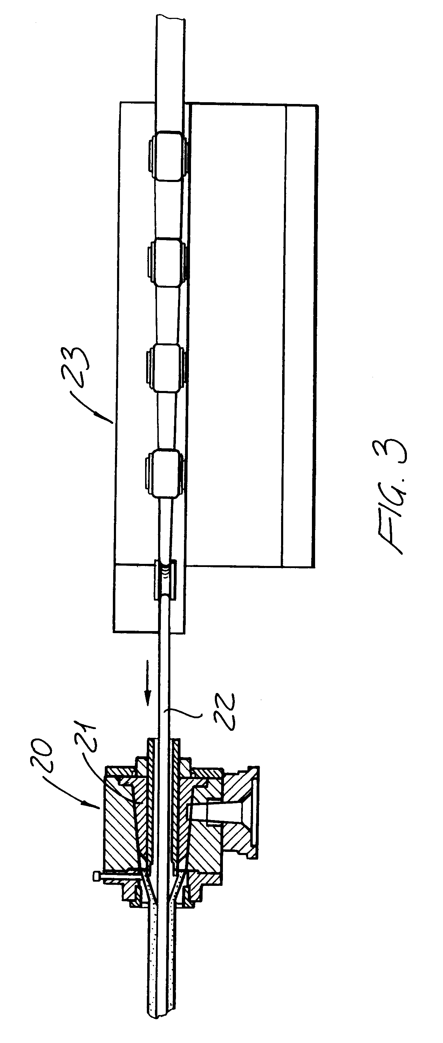

Figure 3 is a partially cross-sectioned view illustrating a detail of the extruder head and of the metal core supplying line included in the plastic material recycling system according to the invention.

### DESCRIPTION OF THE PREFERRED EMBODIMENT

With reference to the number references of the above mentioned figures, the system for recycling heterogeneous plastic materials for coating metal articles according to the present invention, comprises a guillotine cutter 1, adapted to cut to a desired size the heterogeneous plastic materials to be recycled.

At the outlet of the cutter 1, there is provided a conveyor belt 2, on which operates a detecting element 3, adapted to detect possible metal materials to be removed from the plastic materials being recycled.

The conveyor 2 conveys the plastic materials to a grinding assembly, advantageously constituted by a grinding mill 4, of the blade type, thereon operates a pneumatic conveyor 5, conveying the ground plastic material to a storage bin 6, through a cyclone 7.

On the bottom of the storage bin 6 there is provided a scroll removing device 10, including an electric motor 11, taking the material from the bottom of the storage bin 6, and supplying said plastic material to an extruder 15, through a vertical force-pressing element 16, also provided with a driving motor.

The extruder 15 is advantageously of the twin-screw type, the screws of which co-rotate at a high speed, and being specifically designed for admixing and homogenizing the plastic material, which plastic material will be successively sent to a filter assembly 18 extruding the product through an extruder head 20, of a cross or transversal type, which is provided with a distributing cone element 21, axially of which is supplied a metal core 22, coming from a metal core supplying line, indicated at the reference number 23, and comprising a roller assembly, adapted to provide a sheet element and transform it into a tubular element.

The plastic material, owing to the particular arrangement of the extruder head, which is arranged at 90° with respect to the metal core supplying line 23, is evenly distributed about set metal core, by providing a very stable coating.

The thickness of this coating can be adjusted by means of a calibrating element 30, downstream of which there is provided a spray cooling tank or basin 31.

The system further comprises a sandwich belt pulling assembly 32, and a floating cutter 33, for cutting to a desired length the pole products thereby obtained.

At the end of the line a collecting region can be provided, generally indicated at the reference number 40.

From the above disclosure it should be apparent that the invention fully achieves the intended aim and objects.

In particular, the fact is to be pointed out that a plastic material recycling system has been provided, which allows to process heterogeneous plastic materials, without requiring any pre-sorting step on said plastic materials, and being adapted to provide a good quality end product, owing to the provision of an extruder head which is transversely arranged, in particular at 90°, with respect to the metal core supply line.

The invention as disclosed is susceptible to several variations and modifications all of which will come within the scope of the invention.

Moreover, all of the details can be replaced by other technically equivalent elements.

In practicing the invention, the used materials, as well as the contingent size and shapes, can be any, depending on requirements.

## Claims

1. A system for recycling heterogeneous plastic materials for coating metal articles, characterized in that said system comprises a grinding assembly for grinding plastic materials to be recycled, said grinding assembly communicating with a storing bin for supplying an extruder, provided with an extruder head, arranged transversely of a metal core supplying line, for supplying metal cores to be coated by said plastic material, at the outlet of said extruder head there being provided a calibrating assembly, downstream of which there is arranged a cooling assembly.

2. A plastic material recycling system, according to Claim 1, characterized in that said system comprises a conveyor belt for supplying the plastic material to said grinding assembly.

3. A plastic material recycling system, according to Claims 1 and 2, characterized in that said grinding assembly comprises a grinding mill.

4. A plastic material recycling system, according to one or more of the preceding claims, characterized in that said system further comprises pneumatic conveyor means, communicating between said grinding mill and said storage bin.

5. A plastic material recycling system, according to one or more of the preceding claims, characterized in that said system further comprises, at the bottom of said storage bin, a driven scroll ejecting device, for removing said plastic material and sending it to said extruder.

6. A plastic material recycling system, according to one or more of the preceding claims, characterized in that said extruder head is arranged substantially at 90° with respect to said supply line.

7. A plastic material recycling system, according to one or more of the preceding claims, characterized in that said supply line comprises a forming assembly, for making a tubular element, starting from a metal sheet element.

8. A plastic material recycling system, according to one or more of the preceding claims, characterized in that said system further comprises a filter assembly, arranged on said extruder head.

9. A plastic material recycling system, according to one or more of the preceding claims, characterized in that said cooling assembly comprises a spray cooling basin.

10. A plastic material recycling system, according to one or more of the preceding claims, characterized in that said system further comprises a sandwich belt pulling assembly.

11. A plastic material recycling system, according to one or more of the preceding claims, characterized in that said system further comprises a floating cutter for cutting to a desired length the coated product obtained in said system.

12. A plastic material recycling system, according to one or more of the preceding claims, characterized in that said system further comprises, at one end of said supply line, a collecting region.
